# EUROPEAN PATENT APPLICATION

(11) **EP 2 713 524 A2**
(43) Date of publication of application: **02.04.2014**
(21) Application number: 13004548.7
(22) Date of filing: 17.09.2013
(51) Int. Cl.: H04B 5/00

(54) **Remote antenna driver for reducing unwanted electromagnetic emissions and/or distortion within a near field communication (NFC) capable device**

(30) Priority: 27.09.2012 US 201213628851
(71) Applicant: Broadcom Corporation, Irvine, CA 92617 (US)
(72) Inventor: Pienkowski, Andrew, St. Neots, PE19 6PQ (GB)
(74) Representative: Jehle, Volker Armin

(57) **Abstract**

A near field communication (NFC) device (200) is disclosed which includes a NFC core (202) communicatively coupled to an antenna module. The NFC core provides low power communication signals that traverse a sizable distance to an antenna module (204). The low power communication signals emit substantially less electromagnetic radiation when compared to high power communication signals that conventionally traverse this sizable distance. As a result, unwanted electromagnetic emissions and/or distortion impressed upon signals within other nearby electronic circuits are lessened. After the low power communication signals (256) reach the antenna module, the antenna module converts the low power communication signals into high power communication signals (264) for transmission to another NFC capable device. Additionally, the antenna module converts communications from this NFC capable device that are modulated onto the high power communication signals (266) to provide the low power communication signals (258) for the NFC core (202).

## Description

### BACKGROUND

### Field of Disclosure

The disclosure relates to near field communication (NFC), and more specifically to reducing unwanted electromagnetic emissions and/or distortion within a NFC capable device.

### Related Art

Near field communication (NFC) devices are being integrated into mobile devices, such as smartphones for example, to facilitate the use of these mobile devices in conducting daily transactions. For example, instead of carrying numerous credit cards, the credit information provided by these credit cards can be loaded into a NFC device and stored therein to be used as needed. The NFC device is simply tapped to a credit card terminal to relay the credit information to complete a transaction. As another example, a ticket writing system, such as those used in bus and train terminals, may simply write ticket fare information onto the NFC device instead of providing a paper ticket to a passenger. The passenger simply taps the NFC device to a reader to ride the bus or the train without the use of the paper ticket.

Conventional NFC devices include a NFC core that is communicatively coupled to an antenna. The continued evolution of silicon semiconductor fabrication technologies has reduced a size of the NFC core from those fabricated by previous silicon semiconductor fabrication technologies; however, a size of the antenna has almost remained the same. As a result, communication signals traversing between the NFC core and the antenna traverse greater distances. Conventionally, high power communication signals traverse these greater distances between the NFC core and the antenna. As a result, these high power communication signals emit sizable amounts of electromagnetic radiation which could impress unwanted electromagnetic emissions and/or distortion upon signals within nearby electronic circuits.

### BRIEF SUMMARY OF THE INVENTION

According to an aspect, a near field communication (NFC) device comprises:
an NFC core configured to provide a low power transmission signal and to receive a low power reception signal; and
an antenna module configured to convert the low power transmission signal into a high power transmission signal, to sense fluctuations in the high power transmission signal, to mirror the fluctuations in the high power transmission signal to provide sensed fluctuation, and to provide the low power reception signal to the NFC core that is indicative of the sensed fluctuation.

Advantageously, the NFC core comprises:
a modulator module configured to modulate information onto a carrier wave to provide the low power transmission signal; and
a demodulator module configured to demodulate the low power reception signal to recover information provided by another NFC device.

Advantageously, the NFC core further comprises:
a controller configured to receive the information from one or more data storage devices, a user interface, or other electrical devices or host devices coupled to the NFC device and to provide the recovered information to the one or more data storage devices, the user interface, or the other electrical devices or the host devices.

Advantageously, the antenna module comprises:
an amplifier module configured to convert the low power transmission signal into the high power transmission signal;
a first current mirror configured to source a first biasing current to the amplifier module, the first biasing current being configured to fluctuate in a substantially similar manner as the high power transmission signal, and to provide a first sensed current that is proportional to the first biasing current and that is indicative of fluctuations in the high power transmission signal; and a second current mirror configured to sink a second biasing current from the amplifier module, the second biasing current being configured to fluctuate in a substantially similar manner as the high power transmission signal, and to provide a second sensed current that is proportional to the second biasing current and that is indicative of the fluctuations in the high power transmission signal.

Advantageously, another NFC modulates information onto the high power transmission signal to cause the fluctuations.

Advantageously, the first current mirror comprises:
a first p-type metal-oxide-semiconductor (PMOS) device configured to provide the first biasing current; and
a second PMOS device configured to provide the first sensed current, and
wherein the second current mirror comprises:
   a first n-type metal-oxide-semiconductor (NMOS) device configured to provide the second biasing current; and
   a second NMOS device configured to provide the second sensed current.

According to an aspect, an antenna module for a near field communication (NFC) device comprises:
an amplifier module configured to amplify a low level current signal to provide a high level current signal; and
a current mirror configured to provide a biasing current to the amplifier module and to provide a sensed current that is proportional to the biasing current, the sensed current being configured to fluctuate in a substantially similar manner as the high level current signal.

Advantageously, the current mirror comprises:
a first p-type metal-oxide-semiconductor (PMOS) device configured to provide the biasing current; and
a second PMOS device configured to provide the sensed current.

Advantageously, the current mirror comprises:
a first n-type metal-oxide-semiconductor (NMOS) device configured to provide the biasing current; and
a second NMOS device configured to provide the sensed current.

Advantageously, the antenna module further comprises:
an inductive coupling element configured to generate a magnetic field using the high level current signal.

Advantageously, the inductive coupling element is configured to inductively receive a communication signal from a second NFC device that is modulated onto the high level current signal.

Advantageously, the communication signal causes the high level current signal to fluctuate.

Advantageously, the NFC device is configured to inductively receive a communication from a second NFC device that is modulated onto the high level current signal, the communication causing the high level current signal to fluctuate.

Advantageously, the amplifier module is characterized as having a current gain of more than unity.

According to an aspect, an antenna module for a near field communication (NFC) device comprises:
an amplifier configured to provide a first communication signal to an inductive coupling element to generate a magnetic field, the inductive coupling element being configured to receive a second communication signal from a second NFC device that is modulated onto the first communication signal; and
a sensing module configured to source a biasing current to the amplifier module, the second communication signal being reconstructed within the biasing current, and to sense the second communication signal within the biasing current to provide a sensed current that is proportional to the biasing current and indicative of the second communication signal.

Advantageously, the sensing module comprises:
a first p-type metal-oxide-semiconductor (PMOS) device configured to provide the biasing current; and
a second PMOS device, coupled to the first PMOS device to form a current mirror, configured to provide the sensed current.

Advantageously, the sensing module comprises:
a first n-type metal-oxide-semiconductor (NMOS) device configured to provide the biasing current; and
a second NMOS device, coupled to the first NMOS device to form a current mirror, configured to provide the sensed current.

Advantageously, the amplifier module is characterized as having a current gain of more than unity.

Advantageously, the antenna module further comprises:
a second sensing module configured to sink a second biasing current from the amplifier module, the second communication being reconstructed within the second biasing current, and to sense the second communication signal within the second biasing current to provide a second sensed current that is proportional to the biasing current and indicative of the second communication signal.

Advantageously, the NFC device is configured to operate on the sensed current to recover information from the second communication signal.

### BRIEF DESCRIPTION OF THE DRAWINGS/FIGURES

Embodiments of the disclosure are described with reference to the accompanying drawings. In the drawings, like reference numbers indicate identical or functionally similar elements. Additionally, the left most digit(s) of a reference number identifies the drawing in which the reference number first appears.

FIG. 1 illustrates a block diagram of a NFC environment according to an exemplary embodiment of the disclosure;

FIG. 2 illustrates a block diagram of a NFC device according to an exemplary embodiment of the disclosure; and

FIG. 3 illustrates a block diagram of an exemplary antenna module that can be implemented as part of the NFC device according to an exemplary embodiment of the disclosure.

The disclosure will now be described with reference to the accompanying drawings. In the drawings, like reference numbers generally indicate identical, functionally similar, and/or structurally similar elements. The drawing in which an element first appears is indicated by the leftmost digit(s) in the reference number.

### DETAILED DESCRIPTION OF THE DISCLOSURE

The following Detailed Description refers to accompanying drawings to illustrate exemplary embodiments consistent with the disclosure. References in the Detailed Description to "one exemplary embodiment," "an exemplary embodiment," "an example exemplary embodiment," etc., indicate that the exemplary embodiment described may include a particular feature, structure, or characteristic, but every exemplary embodiment may not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other exemplary embodiments are possible, and modifications may be made to the exemplary embodiments within the spirit and scope of the disclosure. Therefore, the Detailed Description is not meant to limit the disclosure. Rather, the scope of the invention is defined only in accordance with the following claims and their equivalents.

Embodiments of the disclosure may be implemented in hardware, firmware, software, or any combination thereof. Embodiments of the disclosure may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

The following Detailed Description of the exemplary embodiments will so fully reveal the general nature of the disclosure that others can, by applying knowledge of those skilled in relevant art(s), readily modify and/or adapt for various applications such exemplary embodiments, without undue experimentation, without departing from the spirit and scope of the disclosure. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

For purposes of this discussion, the term "module" shall be understood to include at least one of software, firmware, and hardware (such as one or more circuits, microchips, or devices, or any combination thereof), and any combination thereof. In addition, it will be understood that each module may include one, or more than one, component within an actual device, and each component that forms a part of the described module may function either cooperatively or independently of any other component forming a part of the module. Conversely, multiple modules described herein may represent a single component within an actual device. Further, components within a module may be in a single device or distributed among multiple devices in a wired or wireless manner.

Although, the present disclosure is to be described in terms of NFC, those skilled in the relevant art(s) will recognize that the present disclosure may be applicable to other communications that use the near field and/or the far field without departing from the spirit and scope of the present disclosure. For example, although the present disclosure is to be described using NFC capable communication devices, those skilled in the relevant art(s) will recognize that functions of these NFC capable communication devices may be applicable to other communications devices that use the near field and/or the far field without departing from the spirit and scope of the present disclosure.

AN EXEMPLARY NEAR FIELD COMMUNICATION (NFC) ENVIRONMENT

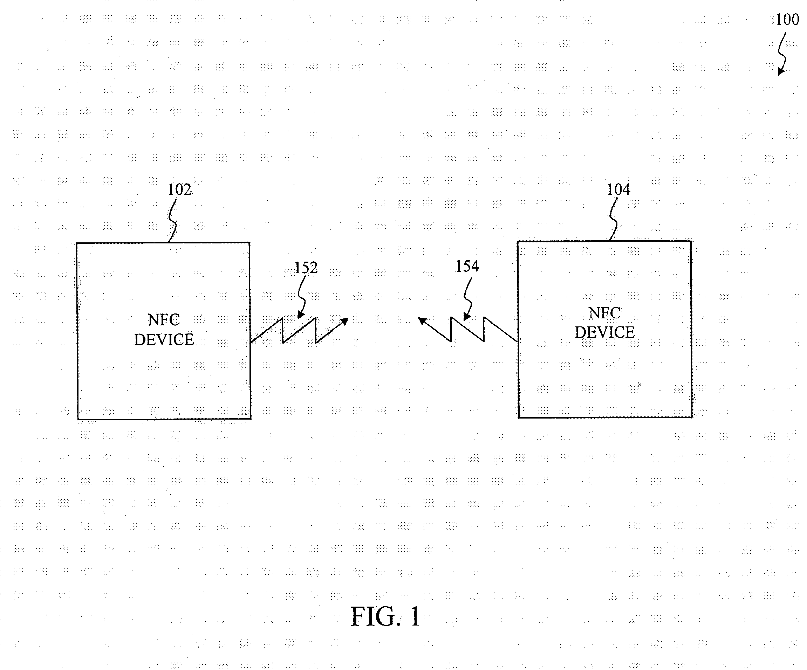

FIG. 1 illustrates a block diagram of a NFC environment according to an exemplary embodiment of the disclosure. A NFC environment 100 provides wireless communication of information, such as one or more commands and/or data, between a first NFC device 102 and a second NFC device 104 that are sufficiently proximate to each other. The first NFC device 102 and/or the second NFC device 104 may be implemented as a standalone or a discrete device or may be incorporated within or coupled to another electrical device or host device to form an NFC capable device. The electrical device or host device can include a mobile telephone, a portable computing device, another computing device such as a personal, a laptop, or a desktop computer, a computer peripheral such as a printer, a portable audio and/or video player, a payment system, such as a point of sale terminal, a ticketing writing system such as a parking ticketing system, a bus ticketing system, a train ticketing system or an entrance ticketing system to provide some examples, or in a ticket reading system, a toy, a game, a poster, packaging, advertising material, a product inventory checking system and/or any other suitable electronic device that will be apparent to those skilled in the relevant art(s) without departing from the spirit and scope of the disclosure.

The first NFC device 102 and/or the second NFC device 104 interact with each other to exchange the information, in a reader/writer (R/W) communication mode. In the R/W communication mode, the first NFC device 102 is configured to operate in an initiator, or reader, mode of operation and the second NFC device 104 is configured to operate in a listener, target, or tag, mode of operation. However, this example is not limiting, those skilled in the relevant art(s) will recognize that the first NFC device 102 may be configured to operate in listener or tag mode and the second NFC device 104 may be configured to operate in the reader mode in accordance with the teachings herein without departing from the spirit and scope of the present disclosure. The first NFC device 102 modulates its corresponding information onto a first carrier wave and generates a first magnetic field by applying the modulated information to a first antenna to provide a modulated communication, referred to as a first communication 152. The first NFC device 102 continues to apply the first carrier wave without its corresponding information, referred to as an unmodulated communication, to continue to provide the first communication 152 once the information has been transferred to the second NFC device 104.

The first NFC device 102 is sufficiently proximate to the second NFC device 104 such that the first communication 152 is inductively coupled onto a second antenna of the second NFC device 104. The second NFC device 104 derives or harvests power from the first communication 152 to recover, to process, and/or to provide a response to the information. The second NFC device 104 demodulates the first communication 152 to recover and/or to process the information. The second NFC device 104 may respond to the information by modulating the second antenna with its corresponding information to modulate the first carrier wave to provide a second communication 154.

The first NFC device 102 and/or the second NFC device 104 typically include a first NFC core that is coupled to the first antenna and a second NFC core that is coupled to the second antenna, respectively. The first NFC core and the second NFC core can include one or more modules, or combination of modules, of the first NFC device 102 and the second NFC device 104, respectively, that are fabricated onto one or more semiconductor substrates which are then communicatively coupled to each other. Typically, these modules can include a modulator, a controller, and/or a demodulator to provide some examples; however, other modules that will be apparent to those skilled in the relevant art(s) can be included without departing from the spirit and scope of the present disclosure.

The continued evolution of silicon semiconductor fabrication technologies has reduced a size of the first NFC core and the second NFC core from those fabricated by previous silicon semiconductor fabrication technologies; however, a size of the first antenna and/or the second antenna have almost remained the same. As a result, the first antenna and the second antenna are located remotely from the first NFC core and the second NFC core, respectively, causing communication signals traversing between the first NFC core and the first antenna and between the second NFC core and the second antenna traverse greater distances. In some situations, these communication signals traverse near other nearby electronic circuits within the first NFC device 102 and/or the second NFC device 104 which could impress unwanted electromagnetic emissions and/or distortion upon signals within these other nearby electronic circuits.

Additionally, the continued evolution of silicon semiconductor fabrication technologies has allowed various modules of communications devices to be combined onto a fewer number of chips and/or dies to form combination, or simply combo, chips or dies, to form an integrated communication device. The integrated communication device often includes, in addition to the first NFC device 102 or the second NFC device 104, a Bluetooth module, a Global Position System (GPS) module, a cellular module, and/or a wireless local area network (WLAN) module. The Bluetooth module provides wireless communication in accordance with various Bluetooth or Bluetooth Low Energy (BLE) standards. The GPS module receives various signals from various satellites to determine location information for the integrated communication device. The cellular module provides wireless communication in accordance with various cellular communication standards such as a Generation Partnership Project (3GPP) Long Term Evolution (LTE) communications standard, a fourth generation (4G) mobile communications standard, or a third generation (3G) mobile communications standard to provide some examples. The WLAN module provides wireless communication over a wired and/or wireless communication network in accordance with various networking protocols such a Worldwide Interoperability for Microwave Access (WiMAX) communications standard or a Wi-Fi communications standard to provide some examples. In this example, the fewer number of chips and/or dies have a smaller overall size; however, a size of respective antennas of the combo chips or dies has almost remained the same. As a result, the antennas of the combo chips or dies are located remotely from their respective combo chips or dies which cause communication signals traversing between these combo chips or dies and their respective antennas traverse greater distances. In some situations, these communication signals traverse near other nearby electronic circuits within the integrated communication device which could impress unwanted electromagnetic emissions and/or distortion upon signals within these other nearby electronic circuits.

OVERVIEW

The following Detailed Description describes an NFC device, such as the first NFC device 102 to provide an example, which includes a NFC core communicatively coupled to an antenna module. The NFC core provides low power communication signals that traverse a sizable distance to an antenna module. The low power communication signals emit substantially less electromagnetic radiation when compared to high power communication signals that are required to drive the antenna module. As a result, unwanted electromagnetic emissions and/or distortion impressed upon signals within other nearby electronic circuits are lessened. After the low power communication signals reach the antenna module, the antenna module converts the low power communication signals into high power communication signals for transmission to another NFC capable device, such as the second NFC device 104 to provide an example. Additionally, the antenna module converts communications from this NFC capable device that are modulated onto the high power communication signals to provide the low power communication signals for the NFC core.

AN EXEMPLARY NFC DEVICE

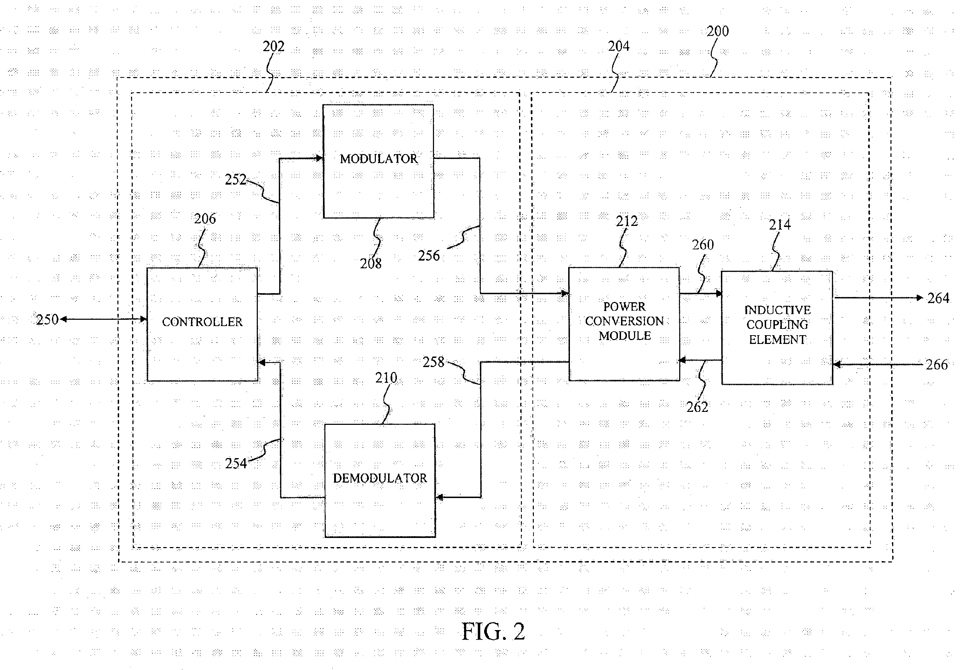

FIG. 2 illustrates a block diagram of a NFC device according to an exemplary embodiment of the disclosure. A NFC device 200 includes a NFC core 202 that is communicatively coupled to an antenna module 204. The NFC core 200 and the antenna module 204 communicate with each other using low power communication signals that traverse sizable distance between the NFC core 202 and the antenna module 204. The antenna module 204 converts low power communication signals from the NFC core 200 to high power communication signals for transmission to another NFC capable device, such as the second NFC device 104 to provide an example, and converts high power communication signals, modulated onto the high power communication signals by the other NFC capable device, to low power communication signals for transmission to the NFC core 202. The NFC device 200 can represent an exemplary embodiment of the first NFC device 102.

The NFC core 202 provides functional aspects for NFC, such as generating carrier waves for transmission and/or recovery of information, formatting of information for transmission, modulating information for transmission, and/or demodulating communication signals to recover information to provide some examples. The NFC core 202 includes a controller module 206, a modulator module 208, and a demodulator module 210. An exemplary embodiment of a two-pin configuration for the NFC core 202 is further described in International Application No.: PCT/GB2010/050471, filed on March 19, 2010, which is incorporated herein by reference in its entirety.

The controller module 206 controls overall operation and/or configuration of the NFC device 200. The controller module 206 provides information 250 to and/or receives the information 250 from one or more data storage devices such as one or more contactless transponders, one or more contactless tags, one or more contactless smartcards, any other machine-readable mediums that will be apparent to those skilled in the relevant art(s) without departing from the spirit and scope of the disclosure, or any combination thereof. The other machine-readable medium may include, but is not limited to, read only memory (ROM), random access memory (RAM), magnetic disk storage media, optical storage media, flash memory devices, electrical, optical, acoustical or other forms of propagated signals such as carrier waves, infrared signals, digital signals to provide some examples. The controller module 206 may also provide the information 250 to and/or receive the information 250 from a user interface such as a touch-screen display, an alphanumeric keypad, a microphone, a mouse, a speaker, any other suitable user interface that will be apparent to those skilled in the relevant art(s) without departing from the spirit and scope of the disclosure to provide some examples. The controller module may further provide the information 250 to and/or receive the information 250 from other electrical devices or host devices coupled to the NFC device 200.

The controller module 206 can provide the information 250 as transmission information 252 for transmission to another NFC capable device. Additionally, can provide recovered information 254 from the demodulator module 210 as the information 250. Further, the controller module 206 may also use the information 250 and/or the recovered information 254 to control the overall operation and/or configuration of the NFC device 200. For example, the controller module 206 may issue and/or execute the one or more commands in accordance with the information 250 and/or the recovered information 254, if appropriate, to control operations of the NFC device 200, such as a transmission power, a transmission data rate, a transmission frequency, a modulation scheme, a bit and/or a byte encoding scheme and/or any other suitable operation parameter that will be apparent to those skilled in the relevant art(s) without departing from the spirit and scope of the disclosure, of other NFC capable devices.

The modulator module 208 modulates the transmission information 252 onto a carrier wave using any suitable analog or digital modulation technique to provide a low power transmission signal 256. The suitable analog or digital modulation technique may include amplitude modulation (AM), frequency modulation (FM), phase modulation (PM), phase shift keying (PSK), frequency shift keying (FSK), amplitude shift keying (ASK), quadrature amplitude modulation (QAM) and/or any other suitable modulation technique that will be apparent to those skilled in the relevant art(s). The modulator module 208 continues to provide the carrier wave as the low power transmission signal 256 once the information has been transferred to another NFC capable device.

The demodulator module 210 demodulates a low power reception signal 258 using any suitable analog or digital modulation technique to provide the recovered information 254. The suitable analog or digital modulation technique may include amplitude modulation (AM), frequency modulation (FM), phase modulation (PM), phase shift keying (PSK), frequency shift keying (FSK), amplitude shift keying (ASK), quadrature amplitude modulation (QAM), and/or any other suitable modulation technique that will be apparent to those skilled in the relevant art(s).

The low power transmission signal 256 and the low power reception signal 258 traverse between the NFC core 202 and the antenna module 204 using a communication coupling. The communication coupling can include one or more fiber optic cables, one or more coaxial cables, one or more copper cables, such as a flexible flat cable to provide an example, one or more bond wires, such as aluminum, copper, or gold bond wires to provide some examples, one or more wave guides, such as one or more transmission lines, such as stripline or microstrip, to provide an example, or any combination thereof. In some situations, the NFC core 202 and the antenna module 204 are spaced far apart, sometimes approaching more than tens of centimeters to provide an example, such that the low power transmission signal 256 and the low power reception signal 258 traverse a sizable distance between the NFC core 202 and the antenna module 204. In these situations, low power characteristics of the low power transmission signal 256 and the low power reception signal 258 lessen electromagnetic radiation emitted by the low power transmission signal 256 and the low power reception signal 258, respectively, when compared to high power communication signals that conventionally traverse this sizable distance. As a result, less unwanted electromagnetic emissions and/or distortion is impressed upon signals within other nearby electronic circuits within the first NFC device 200 by the low power transmission signal 256 and the low power reception signal 258.

The antenna module 204 converts the low power transmission signal 256 from being a low power communication signal to a high power communication signal for transmission to another NFC capable device and converts a high power communication signal that is received from the other NFC capable device to a low power communication signal to provide the low power reception signal 258. The antenna module 204 includes a power conversion module 212 and an inductive coupling element 214. The power conversion module 212 converts the low power transmission signal 256 from being the low power communication signal to the high power communication signal to provide a high power transmission signal 260 and/or converts a high power reception signal 262 from being the high power communication signal to the low power communication signal to provide the low power reception signal 258.

The inductive coupling element 214 applies the high power transmission signal 260 to an inductive coupling element, such as a tuned resonant circuit to provide an example, to generate a magnetic field to provide a transmitted communication signal 264. Additionally, the inductive coupling element 214 inductively receives a received communication signal 266 that is modulated onto the high power transmission signal 260 to provide the high power reception signal 262. Additionally, the antenna module 204 allows an impedance of the inductive coupling element 214 to be defined by the inductive coupling element 214 whereas a conventional antenna, which has longer communication coupling to its respective conventional core, would have its impedance defined by the longer communication coupling starting from the conventional core.

AN EXEMPLARY ANTENNA MODULE THAT CAN BE IMPLEMENTED AS PART OF THE NFC DEVICE

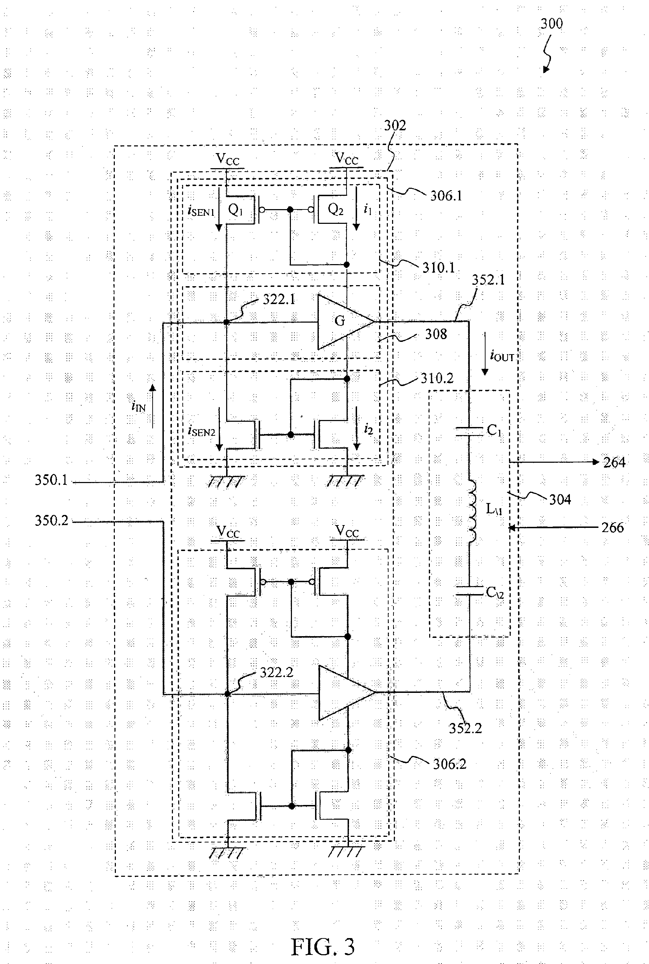

FIG. 3 illustrates a block diagram of an exemplary antenna module that can be implemented as part of the NFC device according to an exemplary embodiment of the disclosure. An antenna module 300 converts a low power communication signal from an NFC core, such as the NFC core 202 to provide an example, to a high power communication signal for transmission to another NFC capable device and converts a high power communication signal that is modulated onto the high power communication signal by the other NFC capable device to a low power communication signal for transmission the NFC core. The antenna module 300 includes a power conversion module 302 and an inductive coupling element 304. The antenna module 300 can represent an exemplary embodiment of the antenna module 204.

The power conversion module 302 converts a low power communication signal 350 from the NFC core to a high power communication signal 352 for transmission to another NFC capable device and converts the high power communication signal 352 that is modulated onto the high power communication signal 352 by the other NFC capable device to the low power communication signal 350 for transmission the NFC core. The low power communication signal 350 and the high power communication signal 352 represent a differential communicational signal having a first low power communication signal 350.1 and a second low power communication signal 350.2 and a first high power communication signal 352.1 and a second high power communication signal 352.2, respectively. The low power communication signal 350 can represent an exemplary embodiment of a combination of the low power transmission signal 256 and the low power reception signal 258 and the high power communication signal 352 can represent an exemplary embodiment of a combination of the high power transmission signal 260 and the high power reception signal 262.

The power conversion module 302 includes a first power conversion module 306.1 and a second power conversion module 306.2. The first power conversion module 306.1 and the second power conversion module 306.2 operate in a substantially similar manner; therefore, only the first power conversion module 306.1 is to be described in further detail. The first power conversion module 306.1 includes an amplifier module 308, a first sensing module 310.1, and a second sensing module 310.2.

The amplifier module 308 amplifies the first low power communication signal 350.1 to provide the first high power communication signal 352.1 in accordance with a gain G. The gain G can represent a voltage gain, a current gain, or any combination thereof. In an exemplary embodiment, the amplifier module 308 can be implemented using any suitable amplifier that is characterized as having a high input impedance and a low output impedance. In another exemplary embodiment, the amplifier module 308 can be implemented using any suitable amplifier that is characterized as having approximately unity voltage gain and more than unity current gain, such as a common drain amplifier or a common collector amplifier to provide some examples. For example, the amplifier module 308 can amplify a low level input current i_{IN} representing the first low power communication signal 350.1 by the gain G to provide a high level output current component i_{OUT} representing the first high power communication signal 350.2. However, these characterizers of the amplifier module 308 are not limiting, those skilled in the relevant art(s) will recognize that other types of amplifiers, such as a common source amplifier, a common emitter amplifier, a common gate amplifier, or a common base amplifier to provide some examples, can be used to implement the amplifier module 308 that will be apparent to those skilled in the relevant art(s) without departing from the spirit and scope of the present disclosure. Additionally, those skilled in the relevant art(s) will recognize that the amplifier module 308 can also be implemented using combinations of amplifiers, such as an operational amplifier to provide an example, without departing from the spirit and scope of the present disclosure.

The first sensing module 310.1 sources a first biasing current i₁ to the amplifier module 308 and the second sensing module 310.2 sinks a second biasing current i₂ from the amplifier module 308. The first sensing module 310.1 senses the first biasing current i₁ to provide a first sensed current i_{SEN1} and the second sensing module 310.2 senses the second biasing current i₂ to provide a second sensed current i_{SEN2}. The first sensing module 310.1 and the second sensing module 310.2 operate in a substantially similar manner; therefore, only the first sensing module 310.1 is to be described in further detail.

The first sensing module 310.1 includes a first p-type metal-oxide-semiconductor (PMOS) device Q₁ and a second PMOS device Q₂ that configured and arranged to form a p-type current mirror to generate the first sensed current i_{SEN1} that is proportional to the first biasing current i₁. It should be noted that the second sensing module 310.2 includes n-type metal-oxide-semiconductor (NMOS) devices that configured and arranged to form an n-type current mirror to generate the second sensed current i_{SEN2} that is proportional to the second biasing current i₂. Typically, the first sensed current i_{SEN1} is approximately equal to the second sensed current i_{SEN2} such that a combination of the first sensed current i_{SEN1} and the second sensed current i_{SEN2} is approximately zero. In an exemplary embodiment, the first PMOS device Q₁ and the second PMOS device Q₂ represent matched semiconductor devices such that the first sensed current i_{SEN1} is substantially similar to the first biasing current i₁. In another exemplary embodiment, the first PMOS device Q₁ is larger than the second PMOS device Q₂ such that the first PMOS device Q₁ effectively multiplies the first biasing current i₁ by a ratio of the first PMOS device Q₁ to the second PMOS device Q₂ to provide the first sensed current i_{SEN1}. In a further exemplary embodiment, the first PMOS device Q₁ is smaller than the second PMOS device Q₂ such that the first PMOS device Q₁ effectively divides the first biasing current i₁ by the ratio of the first PMOS device Q₁ to the second PMOS device Q₂ to provide the first sensed current i_{SEN1}.

The inductive coupling element 304 applies the high power communication signal 352 to its inductive coupling element to generate a magnetic field to provide the transmitted communication signal 264. Additionally, the inductive coupling element 214 inductively receives a received communication signal 266 that is modulated onto the high power communication signal 352. The inductive coupling element 304 includes a first capacitor C₁, an inductor L₁, and a second capacitor C₂ that are configured and arranged in to form a series resonant circuit. However, this example is not limiting, those skilled in the relevant art(s) will recognize that other series resonant circuits, parallel resonant circuits, or combinations of series and parallel resonant circuits are possible without departing from the spirit and scope of the present disclosure.

During operation, the NFC core provides the low level input current i_{IN} representing the first low power communication signal 350 to the antenna module 300. The amplifier module 308 amplifies the low level input current i_{IN} to provide the high level output current i_{OUT}. The first sensing module 310.1 source the biasing current i₁ to the amplifier module 308 and the second sensing module 310.2 sinks the second biasing current i₂ from the amplifier module 308 to bias the amplifier module 308. A magnitude of the biasing current i₁ and a magnitude second biasing current i₂ are related to the low level input current i_{IN} and the high level output current i_{OUT}. As the high level output current i_{OUT} fluctuates, which typically occurs when another NFC capable device modulates its information onto the high power communication signal 352, the biasing current i₁ and the second biasing current i₂ will similarly fluctuate. For example, the information from this other NFC capable device cause fluctuations in the output current i_{OUT} which are reconstructed in the first biasing current i₁ and the second biasing current i₂ since the current required by the amplifier module 308 will fluctuate in a substantially similar manner as the output current i_{OUT}. This fluctuation of the biasing current i₁ and the second biasing current i₂ is sensed by the first sensing module 310.1 and second sensing module 310.2 within the first sensed current i_{SEN1} and the second sensed current i_{SEN2}. The NFC core can monitor current and/or voltage at monitoring nodes 322.1 and 322.2 to detect the fluctuations within the first sensed current i_{SEN1} and the second sensed current i_{SEN2}, respectively, which are attributable to fluctuations within the high power communication signal 352.

### CONCLUSION

It is to be appreciated that the Detailed Description section, and not the Abstract section, is intended to be used to interpret the claims. The Abstract section may set forth one or more, but not all exemplary embodiments, of the disclosure, and thus, are not intended to limit the disclosure and the appended claims in any way.

The disclosure has been described above with the aid of functional building blocks illustrating the implementation of specified functions and relationships thereof. The boundaries of these functional building blocks have been arbitrarily defined herein for the convenience of the description. Alternate boundaries may be defined so long as the specified functions and relationships thereof are appropriately performed.

It will be apparent to those skilled in the relevant art(s) that various changes in form and detail can be made therein without departing from the spirit and scope of the disclosure. Thus the disclosure should not be limited by any of the above-described exemplary embodiments, but should be defined only in accordance with the following claims and their equivalents.

## Claims

1. A near field communication (NFC) device, comprising:
an NFC core configured to provide a low power transmission signal and to receive a low power reception signal; and
an antenna module configured to convert the low power transmission signal into a high power transmission signal, to sense fluctuations in the high power transmission signal, to mirror the fluctuations in the high power transmission signal to provide sensed fluctuation, and to provide the low power reception signal to the NFC core that is indicative of the sensed fluctuation.

2. The NFC device of claim 1, wherein the NFC core comprises:
a modulator module configured to modulate information onto a carrier wave to provide the low power transmission signal; and
a demodulator module configured to demodulate the low power reception signal to recover information provided by another NFC device.

3. The NFC device of claim 2, wherein the NFC core further comprises:
a controller configured to receive the information from one or more data storage devices, a user interface, or other electrical devices or host devices coupled to the NFC device and to provide the recovered information to the one or more data storage devices, the user interface, or the other electrical devices or the host devices.

4. The NFC device of any preceding claim, wherein the antenna module comprises:
an amplifier module configured to convert the low power transmission signal into the high power transmission signal;
a first current mirror configured to source a first biasing current to the amplifier module, the first biasing current being configured to fluctuate in a substantially similar manner as the high power transmission signal, and to provide a first sensed current that is proportional to the first biasing current and that is indicative of fluctuations in the high power transmission signal; and a second current mirror configured to sink a second biasing current from the amplifier module, the second biasing current being configured to fluctuate in a substantially similar manner as the high power transmission signal, and to provide a second sensed current that is proportional to the second biasing current and that is indicative of the fluctuations in the high power transmission signal.

5. The NFC device of any preceding claim, wherein another NFC modulates information onto the high power transmission signal to cause the fluctuations.

6. The NFC device of claim 4 or 5, wherein the first current mirror comprises:
a first p-type metal-oxide-semiconductor (PMOS) device configured to provide the first biasing current; and
a second PMOS device configured to provide the first sensed current.

7. The NFC device of any of claims 4 to 6, wherein the second current mirror comprises:
a first n-type metal-oxide-semiconductor (NMOS) device configured to provide the second biasing current; and
a second NMOS device configured to provide the second sensed current.

8. An antenna module for a near field communication (NFC) device, comprising:
an amplifier module configured to amplify a low level current signal to provide a high level current signal; and
a current mirror configured to provide a biasing current to the amplifier module and to provide a sensed current that is proportional to the biasing current, the sensed current being configured to fluctuate in a substantially similar manner as the high level current signal.

9. The antenna module of claim 8, wherein the current mirror comprises:
a first p-type metal-oxide-semiconductor (PMOS) device configured to provide the biasing current; and
a second PMOS device configured to provide the sensed current.

10. The antenna module of claim 8 or 9, wherein the current mirror comprises:
a first n-type metal-oxide-semiconductor (NMOS) device configured to provide the biasing current; and
a second NMOS device configured to provide the sensed current.

11. The antenna module of any of claims 8 to 10, further comprising:
an inductive coupling element configured to generate a magnetic field using the high level current signal.

12. The antenna module of claim 11, wherein the inductive coupling element is configured to inductively receive a communication signal from a second NFC device that is modulated onto the high level current signal.

13. The antenna module of any of claims 8 to 12, wherein the communication signal causes the high level current signal to fluctuate.

14. The antenna module of any of claims 8 to 13, wherein the NFC device is configured to inductively receive a communication from a second NFC device that is modulated onto the high level current signal, the communication causing the high level current signal to fluctuate.

15. An antenna module for a near field communication (NFC) device, comprising:
an amplifier configured to provide a first communication signal to an inductive coupling element to generate a magnetic field, the inductive coupling element being configured to receive a second communication signal from a second NFC device that is modulated onto the first communication signal; and
a sensing module configured to source a biasing current to the amplifier module, the second communication signal being reconstructed within the biasing current, and to sense the second communication signal within the biasing current to provide a sensed current that is proportional to the biasing current and indicative of the second communication signal.
